# EUROPÄISCHE PATENTSCHRIFT

(11) **EP 3 255 761 B1**
(45) Veröffentlichungstag und Bekanntmachung des Hinweises auf die Patenterteilung: **01.07.2020**
(21) Anmeldenummer: 17174018.6
(22) Anmeldetag: 01.06.2017
(51) Int. Cl.: H02K 7/11, H02K 7/116, H02K 49/10, H02K 7/00

(54) **ANTRIEBSSTRANGSYSTEM UND VERFAHREN ZUM BETREIBEN EINES ANTRIEBSSTRANGES**
DRIVETRAIN SYSTEM AND METHOD FOR OPERATING SAME
SYSTÈME DE GROUPE MOTOPROPULSEUR ET SON PROCÉDÉ DE FONCTIONNEMENT

(30) Priorität: 10.06.2016 DE 102016210333
(43) Veröffentlichungstag der Anmeldung: 13.12.2017
(73) Patentinhaber: Deere & Company, Moline, IL 61265 (US)
(72) Erfinder: Lang, Matthias, 68163 Mannheim (DE); Gugel Dr., Rainer, 68163 Mannheim (DE)
(74) Vertreter: Dehnhardt, Florian Christopher

(56) Entgegenhaltungen:
- DE-A1- 10 318 696
- GB-A- 2 523 088

## Beschreibung

Die Erfindung betrifft einen Antriebsstrang und ein Verfahren zum Betreiben desselben, besonders mit einem variablen Leistungsanteil.

Auf dem Gebiet der stufenlosen Getriebe ist es üblich, dass die vom Antrieb kommende Leistung, innerhalb des Getriebes in mehrere Leistungspfade aufgeteilt wird. Hierbei ist wenigstens ein Leistungspfad mit einem variablen Anteil ausgeführt, bei dem die Übersetzung zwischen einem Ein- und Ausgang variabel einstellbar ist.

Bei einem leistungsverzweigten Stufenlosgetriebe wird die Leistung im Getriebe aufgeteilt, so dass ein Anteil über einen Pfad mit einer variablen Übersetzung geleitet wird. Der übrige Anteil wird meist mechanisch parallel zu dem variablen Pfad geleitet. Im Anschluss erfolgt erneut eine Summierung der Leistungspfade über eine angeschlossene Verzahnung.

Die Leistungsverzweigung ist bedingt durch die technische Konstruktion notwendig. Dabei sind zwei Konzepte auf dem Gebiet der Technik üblich.

Der variable Pfad ist meist in Form eines Kegelradgetriebes (*continuous variable transmissi*on) ausgeführt. Dabei sind zwei Wellen mit jeweils einander gegenüberliegenden Kegelradpaaren vorgesehen. Zwischen den Kegelradpaaren verläuft ein Schubgliederband als Übertragungsmittel. Dies dient dazu, die Leistung von einem Kegelradpaar auf das andere zu übertragen. Die Kegelradpaare sind jeweils gegeneinander in axialer Richtung verstellbar, so dass die Kontaktlänge der Übertragungsmittel mit den Kegelradpaaren entsprechend dem Abstand der Kegelradpaare verstellt wird und gleichzeitig der Radius variiert wird. Durch das gezielte Ansteuern der Abstände kann die Übersetzung zwischen beiden Wellen in einem weiten gewählt werden.

Aufgrund der Konstruktion muss das Übertragungsmittel die Leistung auf die Kegelräder mittels Reibkontakt übertragen. Hierfür ist eine eingestellte Anpresskraft notwendig, um den Reibschluss sicherzustellen. Der Reibkontakt und die damit verbundene Leistungsübertragung unterliegen Schwankungen, die durch Anheben und Absenken der Leistung verursacht werden. Hierdurch kommt es zu Schwankungen der Reibkraft zwischen dem Übertragungsmittel und den Kegelradpaaren. In der Folge entsteht eine Relativbewegung, durch die ein Einbruch der Leistungsübertragung erfolgt.

Die Relativbewegung soll vermieden werden. Dies geschieht durch eine entsprechende Steuerung für die Anpresskraft der Kegelradpaare und konstruktiv durch eine Leistungsverzweigung, so dass nur ein Teil der Antriebsleistung über das CVT geleitet wird. Der restliche Anteil wird mechanisch im Antriebsstrang nach dem CVT wieder aufsummiert und an den Abtrieb weiter geleitet.

Bei der Verwendung in leistungsstarken Antrieben wird daher nur ein bestimmter Leistungsanteil über das CVT geleitet. Der mechanische Anteil bedarf einer massiven Konstruktion, um die Leistung mittels klassischer Getriebe, meist Stirnrad- oder Schrägverzahnungen, an dem variablen Pfad vorbei zu leiten.

Eine weitere Variante ist die Ausführung des variablen Getriebepfads in Form eines hydraulischen Getriebes. Hierbei wird der variable Leistungsanteil mittels einer Hydraulikpumpe in hydraulische Energie umgesetzt. Über die Ansteuerung der Hydraulikpumpe und des Hydraulikmotors kann der Wirkungsgrad der Umsetzung von mechanische in hydraulische Energie in einem weiten Bereich gesteuert werden.

Hierbei entstehen durch die Konstruktion innerhalb des Hydraulikkreislaufs Druckverluste, die zu Leistungsverlusten führen. Die Hydraulik weist auch, ähnlich dem CVT Getriebe einen hydraulischen Schlupf auf, der durch einen Temperaturanstieg der Hydraulikflüssigkeit verursacht wird. Somit wird bei hydromechanischen Getriebesystemen die Steuerung derart geregelt und konstruiert, dass ein Überhitzen der Hydraulikflüssigkeit vermieden wird.

Dies führt dazu, dass Getriebe für eine variable Übersetzung einen komplexen Aufbau mit zahlreichen Komponenten aufweisen. Der mechanische Leistungspfad solcher Getriebe muss an die Leistungsgrenzen des variablen Getriebepfads angepasst sein. Die hat je nach Leistungsniveau eine erhebliche Getriebegröße zur Folge. Durch die Größe und das damit verbundene Gewicht der Getriebeeinheiten steigen die Materialkosten. Im Fall einer Verwendung im Fahrzeug führt dies zu einem Gewichtsanstieg und erhöhtem Verbrauch.

DE 103 18 696 A1 zeigt einen Antriebsstrang mit variabler Eingangs- und konstanter Ausgangsdrehzahl. Hierbei ist ein verzweigter Antriebsstrang vorgesehen, mit einer magnetischen Kupplung und einem Überlagerungsgetriebe.

GB 2 523 088 zeigt ein magnetisches Getriebe mit einer Leistungsverzweigung, wobei durch diese ein elektrischer und ein mechanischer Pfad zur Verfügung gestellt wird.

Es ist somit Aufgabe der Erfindung, die obigen Probleme zu lösen.

Die Aufgabe wird gelöst durch ein Antriebsstrangsystem, das ein Eingangselement, ein Ausgangselement und eine magnetische Getriebestufe umfasst, unmittelbar am Ausgangselement, die einen ersten Rotor mit einer ersten Anzahl Polpaare, einen zweiten Rotor mit einer zweiten Anzahl Polpaare, die sich von der ersten Anzahl unterscheidet, und einen dritten Rotor mit einer Anzahl von Polstäben, die so angeordnet sind, dass das magnetische Feld zwischen den ersten und zweiten Polpaaren moduliert wird, umfasst. Das System umfasst weiterhin eine mechanische Getriebestufe zwischen der magnetischen Getriebestufe und dem Eingangselement im Antriebsstrang, ein Steuerungsmittel, um einen Leistungsfluss zwischen Ein- und Ausgangselement zu steuern, wobei das Steuerungsmittel mit einem Rotor der magnetischen Getriebestufe und mit einer Welle der mechanischen Getriebestufe verbunden ist.

Mit Hilfe der Steuermittel, besonders im Fall von elektrischen Steuermitteln, kann ein kurzes Ansprechverhalten der Getriebestufen sichergestellt werden. Ein elektrisches Steuermittel, z.B. ein elektrischer Antrieb bietet die Möglichkeit, dass dieser kurzzeitig überlastet werden kann, Dies ist bei mechanischen und hydraulischen Systemen nicht möglich, da diese bei Überlast sofort beschädigt werden.

Durch die magnetische Getriebestufe können kurzzeitig Lastspitzen durch das Antriebsstrangsystem geleitet werden, die über dem durchschnittlichen Lastniveau liegen. Durch den Lastanstieg fließt kurzzeitig mehr Strom durch die magnetische Getriebestufe, so dass die höheren Leistungen kurzzeitig auftreten können.

Durch den Wegfall von rotierenden Wellen in der magnetischen Getriebestufe entfallen auch die entsprechenden Wälzlager. Diese verursachen üblicherweise durch die Wälzvorgänge zum einen Leistungsverluste, die innerhalb der Lager in Wärme umgewandelt werden, zum anderen Geräuschemission durch das Abrollen der Wälzkörper auf den Laufflächen. Somit kann durch die Verwendung der magnetischen Getriebestufe die Geräuschemission gesenkt werden, bei gleichzeitiger Erhöhung der Leistungsrate.

Bei dem magnetischen Getriebe kann die Drehrichtung frei festgelegt werden. Dies ist möglich aufgrund des Aufbaus und der Kalkulation von magnetischen Getrieben dieser Art. Damit kann für jeden Anwendungsfall ein Optimum gewählt werden, da diese Getriebe als Minusoder als Plusgetriebe ausgelegt werden können.

Durch das Zusammenwirken des mechanischen und des magnetischen Getriebes können hohe Leistungen mit dem Getriebe verarbeitet werden. Weiterhin ist es nicht notwendig, eine Leistungsbegrenzung einzuhalten. Die Steuerung ermöglicht eine einfache Regelbarkeit des Antriebssystems, ohne eine komplizierten Aufbau zu erfordern. Bei hydraulischen oder mechanischen Systemen ist die strikte Einhaltung von Überlastgrenzen hingegen kritisch. Solche Systeme können, im Gegensatz zum vorliegenden Antriebsstrangsystem nicht durch Schlupf auf Überlast reagieren und werden dadurch beschädigt.

In einer weiteren Ausführung können die Drehzahlen des Rotors und der Welle, mit denen das Steuerungsmittel verbunden ist, unabhängig voneinander gesteuert werden.

Mit der unabhängigen Steuerung kann eine optimale Anpassung des Antriebsstrangsystems an die auftretende Fahrsituation erfolgen.

In einer zusätzlichen Ausbildung können der Rotor und die Welle direkt miteinander verbunden sein.

Mit der gemeinsamen Verbindung kann ein kleiner Bauraum verwendet werden, da eine Umlenkung mittels weiterer Verzahnungen entfällt. Durch die gemeinsame Verbindung kann eine Notlauffunktion ermöglicht werden, falls die Steuerungsmittel ausfallen.

Bei einer Ausführung kann das Steuerungsmittel einen ersten elektrischen Motor umfassen.

Mit dem elektrischen Motor sind schnelle Steuerungszeiten zu erzielen. Der Motor kann hohe Drehmomente abgeben und dies in kurzer Zeit, so dass ein schnelles Ansprechverhalten möglich ist. Der Motor kann aufgrund des Aufbaus auch als Generator eingesetzt werden und somit eingehende Leistung in elektrische Leistung umsetzten.

In einer weiteren Ausbildung kann das Steuerungsmittel an einer Batterie oder an einem Akkumulator angeschlossen sein.

Dies ermöglicht es, durch den Generatorbetrieb des Motors die angeschlossene Batterie oder den angeschlossenen Akkumulator zu laden. Im Umkehrschluss kann auch Leistung von der Batterie oder dem Akkumulator an den Motor abgegeben werden, so dass dieser selbst Leistung an das Antriebsstrangsystem abgeben kann. So ist es möglich, innerhalb kurzer Zeit auf besondere Antriebsanforderungen zu reagieren.

In einer Ausbildung kann das Steuerungsmittel einen zweiten elektrischen Motor umfassen, der mit einer Welle im Antriebsstrang zur Übertragung von Leistung und/oder Drehzahl verbunden ist und zwischen dem Eingangselement und der magnetischen Getriebestufe angeordnet ist.

Mit dem zweiten Motor, der ebenfalls als Generator betrieben werden kann, kann ein elektrisches variables Getriebe realisiert werden. Hierbei wird Leistung vom zweiten Motor aufgenommen und in elektrische Energie umgewandelt. Diese wird moduliert und vom ersten Motor wieder in mechanische Leistung umgewandelt. Dabei kann die Leistung angehoben oder abgesenkt werden, etwa durch Hinzufügen oder Abziehen von elektrischer Leistung durch z.B. Akkumulatoren oder Batterien, so dass eine genaue Anpassung an die notwendigen Leistungsvorgaben, welche durch die Steuerungsmittel berechnet werden, erfolgen kann. Hierdurch kann eine variable Übersetzung ermöglicht werden.

In einer bevorzugten Ausführung kann elektrische Energie von dem zweiten elektrischen Motor an den ersten elektrischen Motor übertragen werden.

Die Leistungsabgabe kann dabei vom zweiten an den ersten Motor erfolgen. Es ist möglich, die abgegebene Leistung damit immer an die benötigte Leistung anzupassen.

In einer weiteren Ausführung kann die mechanische Getriebestufe durch eine weitere magnetische Getriebestufe ersetzt werden.

Die mechanischen Getriebeverzahnungen können somit vermieden werden. Durch ein Verzahnungsgetriebe entstehen durch die Konstruktion Getriebeverluste durch das Abwälzen der Zahnflanken. Mit einem weiteren magnetischen Getriebe können diese Verluste vermieden werden. Weiterhin wird durch den Wegfall der Verzahnung die Akustik verbessert. Das Ineinandergreifen der Verzahnung verursacht stets akustische Impulse, die das magnetische Getriebe nicht aufweist. Das Antriebsstrangsystem wird somit leiser. Zusätzlich benötigen verzahnte Getriebe eine Schmierung. Bei der magnetischen Stufe ist dies nicht notwendig, so dass die Einrichtung einer Schmierung unterbleiben kann. Durch die Verwendung der magnetischen Stufe sinkt insgesamt die Komplexität des Aufbaus des Antriebsstrangsystems.

Bei einer Ausbildung kann das Antriebsstrangsystem ein zweites Ausgangselement aufweisen.

Innerhalb der Antriebsstrangsystems erfolgt eine Leistungsaufteilung. Hierdurch liegen am Ausgang zwei unterschiedliche Leistungen vor, die beide für einen Antrieb verwendet werden können. Somit kann zwischen beiden Leistungen ein Umschalten erfolgen. Die Schaltung kann damit auch ohne Zugkraftunterbrechung erfolgen.

Die Aufgabe wird auch gelöst durch ein Verfahren zum Betreiben eines Antriebsstranges, wobei der Antriebstrang ein Eingangselement, zur Einleitung von Drehmoment und Drehzahl, zwei Ausgangselemente, zur Abgabe von Drehmoment und Drehzahl und eine magnetische Getriebestufe umfasst, die einen ersten Rotor mit einer ersten Anzahl Polpaare umfasst, einen zweiten Rotor mit einer zweiten Anzahl Polpaare, die sich von der ersten Anzahl unterscheidet und einen dritten Rotor mit einer Anzahl von Polstäben, die so angeordnet sind, dass das magnetische Feld zwischen den ersten und zweiten Polpaaren moduliert wird. Weiter umfasst der Antriebsstrang eine mechanische Getriebestufe, Steuerungsmittel zum Steuern von Drehmoment und Drehzahl zwischen dem Ein- und Ausgangselement, wobei die Durchleitung von Drehmoment und Drehzahl vom Eingangselement an einen Rotor der magnetischen Getriebestufe erfolgt, und/oder an die mechanische Getriebestufe geleitet wird, wobei die magnetische Getriebestufe und die mechanische Getriebestufe als Summengetriebe ausgeführt sind, und eine Drehzahl eines Rotors der magnetischen Getriebestufe und eine Drehzahl der Welle der mechanischen Getriebestufe durch die Steuerungsmittel geregelt wird.

Mit dem Verfahren kann die Leistung auf zwei Pfade aufgeteilt werden. Ein solches Getriebe ist in GB2523088 offenbart. Durch die vorliegende Anmeldung soll das magnetische Getriebe aus GB2523088 in Anspruch genommen werden. Damit wird das Getriebe aus GB2523088 auch Teil der vorliegenden Anmeldung.

Durch die Steuerungsmittel kann die Leistung beliebig auf die beiden Ausgangselemente aufgeteilt werden. Das Verhältnis zwischen den beiden Ausgängen ist damit frei einstellbar und bietet eine hohe Flexibilität für die jeweils vorhandenen Leistungsanforderungen. Es ist möglich, ohne Zugkraftunterbrechung zwischen den beiden Leistungsausgängen zu schalten.

In einer weiteren Ausführung kann die Leistung vom Eingangselement auf die magnetische und mechanische Getriebestufe aufgeteilt werden.

Hierdurch können die jeweiligen Getriebestufen sehr exakt bereits auf die im Betrieb auftretenden Leistungen abgestimmt werden. Durch die Steuerungsmittel kann eine genaue Überwachung der eingeleiteten Leistungen erfolgen. Dies führt zu einer verlängerten Lebensdauer.

Bei einer Ausbildung kann vor der Leistungsverzweigung in die magnetische und mechanische Getriebestufe ein Teil der Leistung in elektrische Energie umgewandelt werden, und die Energie zwischen der magnetischen und mechanischen Getriebestufe zur Steuerung derselben verwendet werden.

Hierdurch kann eine Steuerung des Antriebsstrangsystems erfolgen, ohne einen Rückgriff auf eine Batterie/Akkumulator vorzusehen. Die Eingangsleistung kann hierdurch in beliebigem Verhältnis durch die Steuerungsmittel aufgeteilt werden. Mit der elektrischen Energie kann auch eine Aufladung der angeschlossenen Batterie/Akkumulator erfolgen.

Bei einer bevorzugten Ausbildung kann zur Steuerung ein elektrischer Motor verwendet werden.

Der elektrische Motor kann mittels einer einfachen Regelung gesteuert werden. Somit wird eine aufwändige Steuerung vermieden, was wiederrum zu einer reduzierten Fehleranfälligkeit führt. Mit einem elektrischen Motor ist es möglich mit großen Drehmomenten für die Steuerungsmittel zu arbeiten, so dass eine entsprechende Durchleitung durch das Antriebsstrangsystem ermöglicht wird. Die Abstützung von hohen Drehmomenten erlaubt somit die Durchleitung von hohen Leistungen. Mit Hilfe des Elektromotors kann auch eine Boost-Funktion umgesetzt werden. Die Zuleitung von zusätzlicher Leistung von Batterien oder Ackumulatoren erlaubt eine Anhebung der Leistung, die durch das Antriebsstrangsystem zum Abtrieb geleitet wird. Hierdurch kann auf aktuelle Anforderungen und Lastspitzen im Antriebsstrang reagiert werden.

Es ist weiterhin möglich, den Elektromotor direkt am Rotor zu realisieren, indem direkt Spulen am Luftspalt vorgesehen werden. Dadurch kann das magnetische Getriebe direkt als Elektromotor arbeiten und ein zusätzlicher Elektromotor als weitere Systemkomponente entfällt.

In einer Ausführung kann eine Leistungseinleitung vom Steuermittel am innersten Rotor der magnetischen Getriebestufe und am Sonnenrad der mechanischen Getriebestufe erfolgen.

Hierdurch ist eine einfache Realisierung der Steuerung möglich. Der Bauraum kann somit ideal genutzt werden, die Steuerungsmittel können auf der Raumachse zwischen dem magnetischen und dem mechanischen Getriebeabschnitt vorgesehen werden. Durch die Verwendung der inneren Getriebebauteile können die Leistungsverhältnisse mit den Steuerungsmitteln direkt und ohne weitere Übersetzung kontrolliert werden.

Bei einer weiteren Ausführung können die Ausgangsleistungen parallel an den Ausgangselementen anliegen.

Es besteht dadurch die Möglichkeit, ohne Zugkraftunterbrechung zwischen den beiden Ausgangsleistungen zu schalten. Dies kann mit Hilfe einer Kupplung durchgeführt werden. Dies ist vorteilhaft für weitere angeschlossene Komponenten im Antriebsstrang nutzbar und ermöglicht die genaue Leistungszuführung.

Als zweckmäßig für die konzeptionelle Darstellung von derartigen Getrieben hat sich die Symbolik nach Wolf erwiesen, in der ein Umlaufgetriebe durch einen Kreis für das Gehäuse und durch drei Striche für die drei Wellen gekennzeichnet wird. Diese Darstellung ist auf dem Gebiet der Technik üblich und bekannt.

Je nach Schaltzustand kann man dadurch die einzelnen Leistungsverläufe visualisieren, ähnlich wie bei Plänen in der Hydraulik oder bei elektrischen Schaltungen.

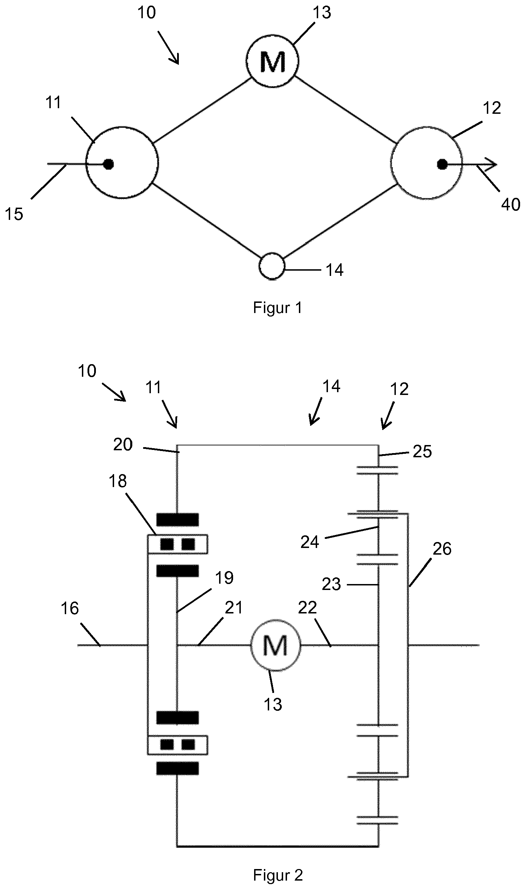

**Figur 1** zeigt einen schematischen Aufbau einer ersten Ausführungsform der Erfindung nach der Wolf Symbolik.

Bei dieser Ausführungsform besteht das Antriebsstrangsystem aus einer magnetischen Getriebestufe 11 und einer mechanischen Getriebestufe 12. Zwischen beiden Getriebestufen 11, 12 ist ein Motor 13 vorgesehen. Der Motor ist mit dem inneren Rotor der magnetischen Getriebestufe 11 und mit dem Sonnenrad der mechanischen Getriebestufe 12 verbunden. Hierdurch kann der Motor 13 zur Steuerung der magnetischen Getriebestufe 11 und der mechanischen Getriebestufe 12 verwendet werden. Weiterhin sind beide Getriebestufen 11, 12 über ein Hohlrad 14 miteinander verbunden. In die magnetische Getriebestufe 11 wird die Eingangsleistung 15 eingeleitet. Durch die mechanische Getriebestufe 12 wird die Ausgangsleistung 40 für den Abtrieb zur Verfügung gestellt. Durch den Motor 13 kann somit sowohl die magnetische Getriebestufe 11, als auch die mechanische Getriebestufe 12 gesteuert und an die Leistungsbedingungen angepasst werden.

Figur 1 zeigt, dass die Eingangsleistung und die Ausgangsleistung jeweils über den Steg der magnetischen Getriebestufe 11 und der mechanischen Getriebestufe 12 ein- bzw. ausgeleitet wird.

**Figur 2** zeigt eine konstruktive Ausführung der Erfindung nach Figur 1.

Die Eingangsleistung 15 wird über die Eingangswelle 16 in die magnetische Getriebestufe 11 eingeleitet. Durch die Konstruktion erfolgt die Einleitung in den Steg oder den mittleren Rotor 18 der magnetischen Getriebestufe 11. Durch den Motor 13 wird der innere Rotor 19 der magnetischen Getriebestufe 11 angetrieben. Die Steuerleistung des Motors 13 wird über eine Welle 21 auf den inneren Rotor 19 übertragen. Hierdurch kann eine Relativleistung eingestellt werden, die vom mittleren Rotor 18 auf den äußeren Rotor 20 der magnetischen Getriebestufe 11 übertragen wird. Der äußere Rotor 20 stellt gleichzeitig das Hohlrad der mechanischen Getriebestufe 12 dar. Durch die Relativleistung, die in den äußeren Rotor der magnetischen Getriebestufe 11eingeleitet wird, wird der äußere Rotor in Rotation versetzt und diese Rotation überträgt sich auf das Hohlrad 25 der mechanischen Getriebestufe 12.

Die mechanische Getriebestufe 12 wird ebenfalls durch den Motor 13 gesteuert. Somit wird die Steuerleistung an das Sonnenrad 23 der mechanischen Getriebestufe 12 über eine Welle 22 eingeleitet. Dadurch wird das Planetenrad 24 der mechanischen Getriebestufe 12 mit einer Leistung beaufschlagt, so das eine Rotation des Planetenrades relativ zum Hohlrad 25 erfolgt. Diese Rotation wird an den Steg 26 der magnetischen Getriebestufe 12 übertragen, so dass eine Ausgangsleistung 40 zur Verfügung gestellt wird.

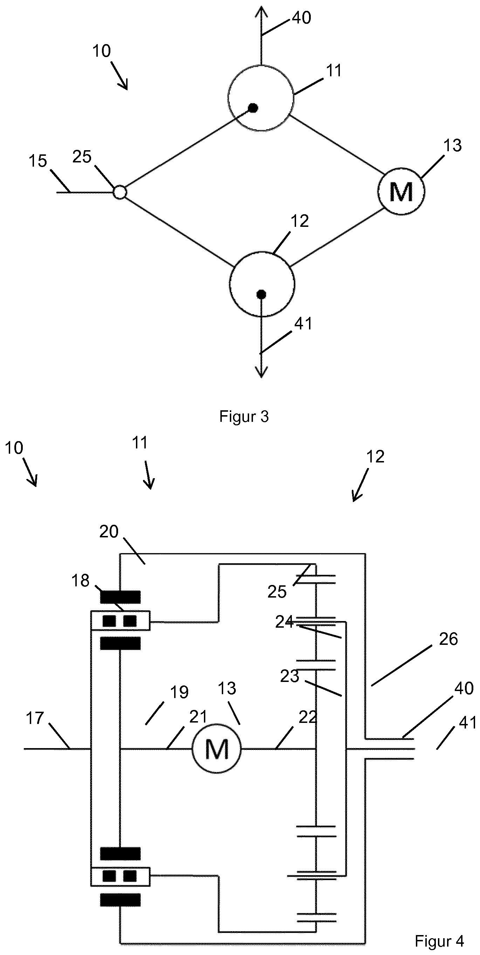

**Figur 3** zeigt einen schematischen Aufbau einer weiteren Ausführungsform der Erfindung nach der Wolf Symbolik.

Hierbei besteht das Antriebsstrangsystem 10 aus einer magnetischen Getriebestufe 11 und einer mechanischen Getriebestufe 12. Beide Getriebestufen sind über den Steg der magnetischen Getriebestufe verbunden, welcher gleichzeitig das Hohlrad der mechanischen Getriebestufe 12 darstellt. Hierdurch wird bei der Einleitung der Leistung diese gleichzeitig in die magnetische und die mechanische Getriebestufe aufgeteilt. Sowohl die magnetische Getriebestufe 11 als auch die mechanische Getriebestufe 12 sind steuerbar mit einem Motor 13 verbunden. Hierdurch wird von der magnetischen Getriebestufe 11 als auch von der mechanischen Getriebestufe 12 jeweils eine Ausgangsleistung zur Verfügung gestellt.

**Figur 4** zeigt eine weitere konstruktive Ausführung der Erfindung nach Figur 3.

Die Eingangsleistung 15 wird über die Eingangswelle 17 in den mittleren Rotor 18 der magnetischen Getriebestufe 11 und gleichzeitig über das Hohlrad 25 der mechanischen Getriebestufe 12 aufgeteilt und in das Antriebsstrangsystem 10 eingeleitet. Es findet eine Leistungsaufteilung in den magnetischen und den mechanischen Leistungspfad des Antriebsstrangsystems 10 statt. In gleicher Form wie im Ausführungsbeispiel der Figuren 1 und 2 wird über den Motor 13 eine Steuerleistung über die Welle 21 in den inneren Rotor 19 der magnetischen Getriebestufe 11 eingeleitet. Hierdurch wird der äußere Rotor 20 der magnetischen Getriebestufe 11 mit einer Ausgangsleistung 40 beaufschlagt und diese an einer Hohlwelle 27 ausgegeben.

Gleichzeitig wird über das Hohlrad 25 Leistung in die mechanische Getriebestufe 12 eingeleitet. Durch das Planetenrad 24 und aufgrund der gleichzeitigen Leistungssteuerung durch den Motor 13 über die Steuerwelle 22 auf das Sonnenrad 22 wird der Steg 26 der mechanischen Getriebestufe 12 mit Leistung beaufschlagt, die über die Ausgangswelle 27 ausgegeben wird.

Durch die zwei unterschiedlichen Ausgangsleistungen 40 und 41, die gleichzeitig an den Wellen 27 und 26 anliegen, kann mit einer Kupplung zwischen beiden Leistungen geschaltet werden.

Das Antriebsstrangsystem kann in allen Antrieben verwendet werden, in denen eine Leistungsänderung zwischen dem Antrieb und dem Abtrieb vorgesehen ist. Insbesondere kann das Antriebsstrangsystem in Fahrzeugen vorgesehen sein. Hierbei kann durch das System eine Baugrößenverkleinerung und Platzersparnis erzielt werden durch den Wegfall des üblichen Rückwärtsgangs und der entsprechenden Zusatzwelle.

Des Weiteren kann das Antriebsstrangsystem an eine Ölschmierung angeschlossenen sein, um die Schmierung zu gewährleisten und eine Wärmeabfuhr zu ermöglichen. Das System kann auch mit einem hydraulischen Getriebe kombiniert werden, um weitere Leistungsverzweigungen zu realisieren.

## Patentansprüche

1. Antriebsstrangsystem (10), das umfasst:
ein Eingangselement, zur Einleitung von Drehmoment und Drehzahl ein oder zwei Ausgangselemente, zur Abgabe von Drehmoment und Drehzahl ein Steuerungsmittel, um einen Leistungsfluss zwischen Ein- und Ausgangselement zu steuern,
eine magnetische Getriebestufe (11) zwischen dem Eingangselement und einer mechanischen Getriebestufe (12) im Antriebsstrang,
die mechanische Getriebestufe (12), in Form eines Planetengetriebes, zwischen der magnetischen Getriebestufe und wenigstens einem Ausgangselement im Antriebsstrang,
wobei die magnetische Getriebestufe (11),
einen ersten inneren Rotor (19) mit einer ersten Anzahl Polpaare,
einen zweiten äußeren Rotor (20) mit einer zweiten Anzahl Polpaare, die sich von der ersten Anzahl unterscheidet, und
einen dritten mittleren Rotor (18) mit einer Anzahl von Polstäben, die so angeordnet sind, dass das magnetische Feld zwischen den ersten und zweiten Polpaaren moduliert wird, umfasst,
wobei der mittlere oder der äußere Rotor der magnetischen Getriebestufe (11) mit einem Hohlrad (25) der mechanischen Getriebestufe (12) verbunden ist,
wobei das Steuerungsmittel einen Motor (13) aufweist, der mit dem inneren Rotor der magnetischen Getriebestufe (11) und mit einem Sonnenrad (23) der mechanischen Getriebestufe (12) verbunden ist, und
die Steuerleistung des Motors (13) über eine Welle (21) auf den inneren Rotor (19) der magnetischen Getriebestufe (11) übertragen wird, und
wobei die Steuerleistung des Motors (13) über eine Welle (22) in das Sonnenrad (23) des Planetengetriebes eingeleitet wird.

2. Antriebsstrangsystem (10) nach Anspruch 1, wobei die Drehzahl des inneren Rotors (19) und die Drehzahl der Welle (22), mit denen das Steuerungsmittel (13) verbunden ist, unabhängig voneinander gesteuert werden können.

3. Antriebsstrangsystem (10) nach Anspruch 1, wobei der innere Rotor (19) und die Welle (22) direkt miteinander verbunden sind.

4. Antriebsstrangsystem (10) nach einem der vorherigen Ansprüche, wobei das Steuerungsmittel (13) an einer Batterie oder an einem Akkumulator angeschlossen ist.

5. Antriebsstrangsystem (10) nach einem der vorherigen Ansprüche, wobei das Steuerungsmittel (13) einen zweiten elektrischen Motor umfasst, der mit einer Welle im Antriebsstrang zur Übertragung von Leistung und/oder Drehzahl verbunden ist und zwischen dem Eingangselement und der magnetischen Getriebestufe angeordnet ist.

6. Antriebsstrangsystem (10) nach Anspruch 5, wobei elektrische Energie von dem zweiten elektrischen Motor an der ersten elektrischen Motor übertragen wird.

7. Antriebsstrangsystem (10) nach einem der vorherigen Ansprüche, wobei die mechanische Getriebestufe (12) durch eine weitere magnetische Getriebestufe ersetzt wird.

8. Antriebsstrangsystem (10) nach einem der vorherigen Ansprüche, wobei das Antriebsstrangsystem (10) ein zweites Ausgangselement aufweist.

9. Verfahren zum Betreiben eines Antriebsstrangsystems (10), wobei das Antriebsstrangsystem (10) umfasst:
ein Eingangselement, zur Einleitung von Drehmoment und Drehzahl,
ein oder zwei Ausgangselemente, zur Abgabe von Drehmoment und Drehzahl,
eine magnetische Getriebestufe (11) zwischen dem Eingangselement und einer mechanischen Getriebestufe (12) im Antriebsstrang,
die einen ersten inneren Rotor (19) mit einer ersten Anzahl Polpaare,
einen zweiten äußeren Rotor (20) mit einer zweiten Anzahl Polpaare, die sich von der ersten Anzahl unterscheidet und
einen dritten mittleren Rotor (18) mit einer Anzahl von Polstäben, die so angeordnet sind, dass das magnetische Feld zwischen den ersten und zweiten Polpaaren moduliert wird, umfasst
die mechanische Getriebestufe (12), in Form eines Planetengetriebes zwischen der magnetischen Getriebestufe und wenigstens einem Ausgangselement im Antriebsstrang,
Steuerungsmittel zum Steuern von Drehmoment und Drehzahl zwischen dem Eingangselement und wenigstens einem Ausgangselement, das einen Motor (13) aufweist,
wobei die Durchleitung von Drehmoment und Drehzahl vom Eingangselement an einen Rotor der magnetischen Getriebestufe (11) erfolgt, und an die mechanische Getriebestufe (12) geleitet wird,
wobei die magnetische Getriebestufe (11) und die mechanische Getriebestufe (12) als Summengetriebe ausgeführt sind, und
wobei der äußere oder der mittlere Rotor der magnetischen Getriebestufe (11) mit einem Hohlrad (25) der mechanischen Getriebestufe (12) verbunden ist,
wobei der Motor (13) mit dem inneren Rotor der magnetischen Getriebestufe (11) und mit einem Sonnenrad (23) der mechanischen Getriebestufe (12) verbunden ist, und
wobei die Steuerleistung des Motors (13) über eine Welle (21) auf den inneren Rotor (19) der magnetischen Getriebestufe (11) übertragen wird, und
wobei die Steuerleistung des Motors (13) über eine Welle (22) in das Sonnenrad (23) des Planetengetriebes eingeleitet wird, und
eine Drehzahl des inneren Rotors (19) der magnetischen Getriebestufe und eine Drehzahl der Welle (22) der mechanischen Getriebestufe durch die Steuerungsmittel (13) geregelt wird.

10. Verfahren zum Betreiben eines Antriebsstranges (10) nach Anspruch 9, wobei die Leistung vom Eingangselement auf die magnetische und mechanische Getriebestufe (12) aufgeteilt wird.

11. Verfahren zum Betreiben eines Antriebsstranges (10) nach einem der Ansprüche 9 oder 10, wobei vor der Leistungsverzweigung in die magnetische und mechanische Getriebestufe (12) ein Teil der Leistung in elektrische Energie umgewandelt wird, und die Energie zwischen der magnetischen und mechanischen Getriebestufe zur Steuerung derselben verwendet wird.

12. Verfahren zum Betreiben eines Antriebsstranges (10) nach einem der Ansprüche 9 bis 11, wobei die Ausgangsleistungen parallel an den Ausgangselementen anliegen.

## Claims

1. Drive train system (10) which comprises:
an input element for applying torque and a rotational speed, one or two output elements for outputting torque and rotational speed, a control means for controlling a power flux between the input and output elements, a magnetic gear stage (11) between the input element and a mechanical gear stage (12) in the drive train,
the mechanical gear stage (12) in the form of a planetary gear mechanism between the magnetic gear stage and at least one output element in the drive train,
wherein the magnetic gear stage (11) comprises a first inner rotor (19) with a first number of pole pairs,
a second outer rotor (20) with a second number of pole pairs which differs from the first number, and
a third middle rotor (18) with a number of pole rods which are arranged in such a way that the magnetic field is modulated between the first and second pole pairs,
wherein the middle rotor or the outer rotor of the magnetic gear stage (11) is connected to a ring gear (25) of the mechanical gear stage (12), wherein the control means has a motor (13) which is connected to the inner rotor of the magnetic gear stage (11) and to a sun gear (23) of the mechanical gear stage (12), and
the control power of the motor (13) is transmitted to the internal rotor (19) of the magnetic gear stage (11) via a shaft (21), and
wherein the control power of the motor (13) is applied to the sun gear (23) of the planetary gear mechanism via a shaft (22).

2. Drive train system (10) according to Claim 1, wherein the rotational speed of the inner rotor (19) and the rotational speed of the shaft (22), to which rotor (19) and shaft (22) the control means (13) is connected, can be controlled independently of one another.

3. Drive train system (10) according to Claim 1, wherein the inner rotor (19) and the shaft (22) are connected directly to one another.

4. Drive train system (10) according to one of the preceding claims, wherein the control means (13) is connected to a battery or to an accumulator.

5. Drive train system (10) according to one of the preceding claims, wherein the control means (13) comprises a second electric motor which is connected to a shaft in the drive train for transmitting power and/or rotational speed, and is arranged between the input element and the magnetic gear stage.

6. Drive train system (10) according to Claim 5, wherein electrical energy is transmitted from the second electric motor to the first electric motor.

7. Drive train system (10) according to one of the preceding claims, wherein the mechanical gear stage (12) is replaced by a further mechanical gear stage.

8. Drive train system (10) according to one of the preceding claims, wherein the drive train system (10) has a second output element.

9. Method for operating a drive train system (10), wherein the drive train system (10) comprises:
an input element for applying torque and rotational speed,
one or two output elements for outputting torque and rotational speed,
a magnetic gear stage (11) between the input element and a mechanical gear stage (12) in the drive train,
which comprises a first inner rotor (19) with a first number of pole pairs,
a second outer rotor (20) with a second number of pole pairs which differs from the first number, and
a third middle rotor (18) with a number of pole rods which are arranged in such a way that the magnetic field between the first and second pole pairs is modulated,
mechanical gear stage (12) in the form of a planetary gear mechanism between the magnetic gear stage and at least one output element in the drive train,
control means for controlling the torque and rotational speed between the input element and at least one output element which has a motor (13),
wherein torque and rotational speed are transmitted from the input element to a rotor of the magnetic gear stage (11) and are conducted to the mechanical gear stage (12),
wherein the magnetic gear stage (11) and the mechanical gear stage (12) are embodied as summation gear mechanism, and
wherein the outer or the middle rotor of the magnetic gear stage (11) is connected to a ring gear (25) of the mechanical gear stage (12),
wherein the motor (13) is connected to the inner rotor of the magnetic gear stage (11) and to a sun gear (23) of the mechanical gear stage (12), and wherein the control power of the motor (13) is transmitted to the inner rotor (19) of the magnetic gear stage (11) via a shaft (21), and
wherein the control power of the motor (13) is applied to the sun gear (23) of the planetary gear mechanism via a shaft (22), and
a rotational speed of the inner rotor (19) of the magnetic gear stage and a rotational speed of the shaft (22) of the mechanical gear stage are regulated by the control means (13).

10. Method for operating a drive train (10) according to Claim 9, wherein the power from the input element is divided between the magnetic and mechanical gear stages (12).

11. Method for operating a drive train (10) according to one of Claims 9 and 10, wherein before the power splitting into the magnetic and mechanical gear stages (12) a portion of the power is converted into electrical energy, and the energy between the magnetic and the mechanical gear stage is used to control said gear stage.

12. Method for operating a drive train (10) according to one of Claims 9 to 11, wherein the output power is applied in parallel to the output elements.

## Revendications

1. Système de chaîne cinématique (10), comprenant :
un élément d'entrée, destiné à induire un couple et une vitesse de rotation,
un ou deux éléments de sortie, destinés à délivrer un couple et une vitesse de rotation,
un moyen de commande, afin de commander un flux de puissance entre les éléments d'entrée et de sortie,
un étage de transmission magnétique (11) entre l'élément d'entrée et un étage de transmission mécanique (12) dans la chaîne cinématique,
l'étage de transmission mécanique (12), sous la forme d'un engrenage planétaire, entre l'étage de transmission magnétique et au moins un élément de sortie dans la chaîne cinématique,
l'étage de transmission magnétique (11) comportant un premier rotor interne (19) ayant un premier nombre de paires de pôles,
un deuxième rotor externe (20) ayant un deuxième nombre de paires de pôles, qui est différent du premier nombre, et
un troisième rotor central (18) ayant un nombre de baguettes polaires qui sont disposées de telle sorte que le champ magnétique entre les premières et deuxièmes paires de pôles est modulé,
le rotor central ou externe de l'étage de transmission magnétique (11) étant relié à une couronne de train planétaire (25) de l'étage de transmission mécanique (12), le moyen de commande possédant un moteur (13) qui est relié au rotor interne de l'étage de transmission magnétique (11) et à une roue solaire (23) de l'étage de transmission mécanique (12), et
la puissance de commande du moteur (13) étant transmise par le biais d'un arbre (21) sur le rotor interne (19) de l'étage de transmission magnétique (11), et
la puissance de commande du moteur (13) étant introduite par le biais d'un arbre (22) dans la roue solaire (23) de l'engrenage planétaire.

2. Système de chaîne cinématique (10) selon la revendication 1, la vitesse de rotation du rotor interne (19) et la vitesse de rotation de l'arbre (22) auquel est relié le moyen de commande (13) pouvant être commandées indépendamment l'une de l'autre.

3. Système de chaîne cinématique (10) selon la revendication 1, le rotor interne (19) et l'arbre (22) étant reliés directement l'un à l'autre.

4. Système de chaîne cinématique (10) selon l'une des revendications précédentes, le moyen de commande (13) étant raccordé à une batterie ou à un accumulateur.

5. Système de chaîne cinématique (10) selon l'une des revendications précédentes, le moyen de commande (13) comportant un deuxième moteur électrique qui est relié à un arbre dans la chaîne cinématique pour la transmission de la puissance et/ou de la vitesse de rotation et qui est disposé entre l'élément d'entrée et l'étage de transmission magnétique.

6. Système de chaîne cinématique (10) selon la revendication 5, de l'énergie électrique étant transmise du deuxième moteur électrique au premier moteur électrique.

7. Système de chaîne cinématique (10) selon l'une des revendications précédentes, l'étage de transmission mécanique (12) étant remplacé par un étage de transmission magnétique supplémentaire.

8. Système de chaîne cinématique (10) selon l'une des revendications précédentes, le système de chaîne cinématique (10) possédant un deuxième élément de sortie.

9. Procédé pour faire fonctionner un système de chaîne cinématique (10), le système de chaîne cinématique (10) comprenant :
un élément d'entrée, destiné à induire un couple et une vitesse de rotation,
un ou deux éléments de sortie, destinés à délivrer un couple et une vitesse de rotation,
un étage de transmission magnétique (11) entre l'élément d'entrée et un étage de transmission mécanique (12) dans la chaîne cinématique,
lequel comporte un premier rotor interne (19) ayant un premier nombre de paires de pôles,
un deuxième rotor externe (20) ayant un deuxième nombre de paires de pôles, qui est différent du premier nombre, et
un troisième rotor central (18) ayant un nombre de baguettes polaires qui sont disposées de telle sorte que le champ magnétique entre les premières et deuxièmes paires de pôles est modulé,
l'étage de transmission mécanique (12), sous la forme d'un engrenage planétaire, entre l'étage de transmission magnétique et au moins un élément de sortie dans la chaîne cinématique,
un moyen de commande destiné à commander un couple et une vitesse de rotation entre l'élément d'entrée et au moins un élément de sortie, lequel possède un moteur (13),
le couple et la vitesse de rotation étant acheminés de l'élément d'entrée à un rotor de l'étage de transmission magnétique (11), et étant amenés à l'étage de transmission mécanique (12),
l'étage de transmission magnétique (11) et l'étage de transmission mécanique (12) étant réalisés sous la forme d'une transmission additive, et
le rotor externe ou central de l'étage de transmission magnétique (11) étant relié à une couronne de train planétaire (25) de l'étage de transmission mécanique (12),
le moteur (13) étant relié au rotor interne de l'étage de transmission magnétique (11) et à une roue solaire (23) de l'étage de transmission mécanique (12), et
la puissance de commande du moteur (13) étant transmise par le biais d'un arbre (21) sur le rotor interne (19) de l'étage de transmission magnétique (11), et
la puissance de commande du moteur (13) étant introduite par le biais d'un arbre (22) dans la roue solaire (23) de l'engrenage planétaire, et
la vitesse de rotation du rotor interne (19) de l'étage de transmission magnétique et la vitesse de rotation de l'arbre (22) de l'étage de transmission mécanique étant régulées par le moyen de commande (13).

10. Procédé pour faire fonctionner un système de chaîne cinématique (10) selon la revendication 9, la puissance de l'élément d'entrée étant répartie sur les étages de transmission magnétique et mécanique (12).

11. Procédé pour faire fonctionner un système de chaîne cinématique (10) selon l'une des revendications 9 et 10, avant la ramification de la puissance dans les étages de transmission magnétique et mécanique (12), une partie de la puissance étant convertie en énergie électrique et l'énergie étant utilisée ente les étages de transmission magnétique et mécanique pour la commande de ceux-ci.

12. Procédé pour faire fonctionner un système de chaîne cinématique (10) selon l'une des revendications 9 à 11, les puissances de sortie étant présentes en parallèle au niveau des éléments de sortie.
